# EUROPEAN PATENT SPECIFICATION

(11) **EP 2 231 435 B1**
(45) Date of publication and mention of the grant of the patent: **28.11.2012**
(21) Application number: 08869612.5
(22) Date of filing: 29.12.2008
(51) Int. Cl.: B60L 11/14, B60W 10/08, B60W 10/26, B60K 6/28, B60K 6/48, B60W 30/188, B60L 11/18, B60K 25/00, B60K 6/20, B60L 1/00, B60R 16/04, B65F 3/00, B60W 10/30, B60H 1/00, B60P 3/20, B60R 16/033

(54) **HYBRID REFUSE COLLECTION VEHICLE WITH AN EQUIPMENT ELECTRICAL POWER TAKE OFF**
HYBRIDES MÜLLSAMMLUNGSFAHRZEUG MIT VORRICHTUNG MIT ELEKTRISCHER ZAPFWELLE
CAMION À ORDURES HYBRIDE AVEC PRISE DE FORCE ÉLECTRIQUE D'ÉQUIPEMENT

(30) Priority: 31.12.2007 WO PCT/IB2007/004471; 31.12.2007 WO PCT/IB2007/004476
(43) Date of publication of application: 29.09.2010
(73) Proprietor: Renault Trucks, 69800 Saint Priest (FR)
(72) Inventor: VALAYER, Richard, F-69740 Genas (FR); MOTTIER, Michel Lou, F-69720 Saint Bonnet De Mure (FR); MILLET, Michael, F-38440 Moidieu Detourbe (FR); LE BRUSQ, Philippe, F-69003 Lyon (FR)
(74) Representative: Putet, Gilles
(86) International application number: PCT/IB2008/055693
(87) International publication number: WO 2009/087551

(56) References cited:
- WO-A-2007/057757
- DE-A1- 3 041 630
- DE-A1- 4 123 843
- DE-A1- 10 162 522
- US-A- 5 257 877

## Description

### TECHNICAL FIELD OF THE INVENTION

The invention is directed to hybrid vehicles comprising an internal combustion engine as well as an electric drive motor, the electric drive motor and the combustion engine being used alternatively or in conjunction for driving the vehicle. While running, the internal combustion engine drives an electric generator providing electricity which can be used for charging a driving battery set. This kind of vehicle is used for many applications such as personal cars or commercial vehicles or trucks. The invention is more particularly directed to hybrid refuse collection vehicles or trucks.

### BACKGROUND OF THE INVENTION

On commercial or heavy duty vehicles and trucks, it is often needed to provide power to bodybuilder equipments. Indeed, such vehicles are often provided by the vehicle manufacturers as only a chassis equipped with a driver's cabin and with the driveline and powertrain. Such chassis is to be equipped by so-called body builders with various bodies or more generally with various equipments specifically suited for a defined application. For refuse collection trucks or vehicles, the body builder equipment comprises a refuse body and a refuse compacting unit packing the loaded refuse inside the body. Such refuse compacting unit needs a quite high level of energy to operate. So in conventional vehicles, this energy cannot be provided by the conventional on-board electric circuit and is necessarily provided through a mechanical power take-off powered by the internal combustion engine.

In conventional vehicles, this energy is generally provided in a mechanical form, using a mechanical power take-off set on the driveline or directly driven by the internal combustion engine. Usually on refuse collection trucks the mechanical power take-off drives a hydraulic pump providing power to the refuse equipment. The main drawback of such mechanical power take-off is that the power available depends directly of the load of the engine or the drive system. Furthermore when the mechanical power is provided in a hydraulic form, it is necessary to use an adjustable flow hydraulic pump the cost of which is quite high.

On know hybrid vehicles, the conventional design of the mechanical power take off, set on the drive line, is kept so the power is provided by the drive motor and battery set which are not designed for providing the required level and duration of power for the refuse equipment. WO 2007/057 757 describes a hybrid vehicle having an electrical power output for driving operating/driving controllers from a high-voltage driving battery or from a low-voltage service battery, according to the preamble of claim 1.

Therefore, the need appears for a new kind of hybrid refuse collection vehicle able to provide power to a body builder equipment in a very efficient way in order to keep all the advantages of a hybrid vehicle in terms of fuel consumption as well as of atmospheric and noise pollution, and to overcome the drawbacks of prior art solutions.

### SUMMARY OF THE INVENTION

In order to achieve this, the invention concerns a hybrid refuse collection vehicle comprising:
- a drive system comprising at least :
- an electric motor system which is connected to a driving circuit;
- a driving battery set which comprises at least a driving battery and which is connected to the driving circuit;
   - a service circuit comprising a service battery set;
   - a refuse body with a closed end opposite to a loading opening;
   - a refuse compacting unit comprising at least an actuator driving packing means which compact and move the loaded refuse towards the closed end;
   - a refuse equipment control unit controlling at least the refuse compactor;
   - an equipment circuit connected to the driving circuit;
   - an equipment electric motor powering directly or indirectly at least the actuator of the refuse compacting unit, the equipment electric motor being mechanically decoupled from the drive system;
   - an equipment battery set which comprises at least an equipment battery;
   - an equipment converter which is adapted to charge the equipment battery and to provide electrical power to the equipment electric motor, the electrical power provided by the equipment converter being derived from the equipment circuit and/or the equipment battery set;
   - equipment control means which are adapted to control at least the equipment converter.

According to the invention, the refuse body has an inclined floor at the closed end and the equipment battery set is situated under the inclined floor near the closed end.

By the implementation of such an equipment converter and electric motor the mechanical energy or the power, available at the body builder equipment end, for a body builder equipment system is clearly independent from the engine or the drive system load as the converter is adapted to adjust the power available for the equipment electric motor. Furthermore the implementation of the equipment battery set fully dedicated to provide energy to the refuse equipment enable operation of said equipment even when the engine is stopped, which allows a reduction of the noise with respect of the noise level of conventional. Moreover, by comparison to known hybrid vehicles the implementation of the equipment battery set allows to adapt said equipment battery set exactly to the refuse equipment needs without taking into consideration the needs of the drive line.

In the context of the invention, the hybrid vehicle may comprise any kind of energy providing unit consuming fuel such as an internal combustion engine or a fuel cell.

According to the invention, the refuse body may have various orientations. For example the closed end of the refuse body may be oriented towards the front of the hybrid vehicle.

According to the invention, the refuse body has an inclined floor at least at the closed end and the equipment battery set is situated under the inclined floor near the closed end. This use of a normally wasted space preserves the refuse capacity of the hybrid vehicle which can be kept to a value comparable to the refuse capacity of a conventional refuse vehicle of a similar size.

The refuse compacting unit may implement any suitable type of actuator for the packing means such as for example an electric screw jack comprising an electric motor driving directly the screw.

According to an embodiment of the invention, the refuse compacting unit is hydraulically actuated, the actuator of the packing means comprising at least one hydraulic cylinder. The equipment motor drives thus a hydraulic pump connected to a hydraulic equipment circuit providing hydraulic power to such hydraulic actuator. Advantageously, the high dynamic regulation allowed by the dedicated electronic power converter with the high speed capability of the equipment electric motor allows the bodybuilder to use a constant flow hydraulic pump and to adjust the flow by the way of the dedicated electronic power converter. As the cost of a constant flow hydraulic pump is significantly lower than the cost of an adjustable flow hydraulic pump, this allows reducing the total cost of the bodybuilder equipment system. Furthermore, the implementation of a hydraulic pump driven by the equipment motor allows the body builder to keep for the refuse collection equipment the same design as for conventional truck which limits eventually the extra cost of the hybrid refuse collection vehicle by comparison to conventional refuse collection vehicle.

According to the invention, the hybrid refuse collection vehicle may also comprise dustbin-tipping means powered directly or indirectly by the equipment battery set and/or the equipment converter. When powered directly, the dustbin-tipping may comprise electric actuators such has electric crew jacks which are powered by the equipment battery set, by the same equipment converter as the packing means or hydraulic pump, or by a dedicated converter. When driven indirectly, the dustbin-tipping means are hydraulically actuated, implementing hydraulic cylinders or motors, and connected to the hydraulic circuit.

According to the invention, the equipment control means may implement any appropriate design. The equipment control means may, for example, comprise a body builder interface and controller controlling at least the equipment converter and receiving information or instructions from the refuse equipment control unit. The equipment control means may also comprise a physical interface for interconnecting the control means to a communication network of the hybrid vehicle enabling communication between the equipment control means and a control unit of the hybrid vehicle. The body builder interface and controller and the refuse equipment control unit may be two separate units but can also be embedded in a same control unit implementing their functions. Such control unit can also be embedded in the equipment converter.

According to an aspect of the invention, the equipment battery set is equipped with sensing means adapted to provide at least a state of charge of the equipment battery set and the equipment control means are adapted to control the equipment converter according also to the state of charge of the equipment battery set. By taking into consideration the state of charge of the equipment battery set, it is possible to adjust the state of charge of both the driving battery set and the equipment battery set so that, for example, any of those is always available for accumulating the electric power recovered during slowing down phases of the movement of the hybrid vehicle.

According to another aspect of the invention, the equipment circuit comprises an electrical converter with an off-board plug for deriving electrical energy from an external network. The implementation of such electrical converter with an off-board plug is more particularly useful for hybrid refuse collection vehicles having short driving periods compared to parking periods during which the hybrid refuse collection vehicles stay still in their garage.

According to an aspect of the invention, the hybrid vehicle comprises a service circuit providing electricity at least to the engine unit. The service circuit may also provide energy to some vehicle accessories. In the context of the invention, these vehicle accessories powered by the service circuit encompass electrical accessories dedicated to moving or traveling functions of the vehicle including security functions essential to the vehicle displacements as well as comfort functions for the drivers and eventually the passengers. In the context of the invention, the service circuit does not provide electricity to heavy duty equipments installed by the body builder such as the refuse equipment. Such heavy duty equipment may include powered equipment facilitating the loading and unloading of the refuse body. According to the invention, these heavy duty equipments, when implemented, would be powered either by the equipment converter or directly the equipment battery set or the hydraulic circuit. Nevertheless the service circuit may provide energy to low consumers of the body builder or refuse equipment such as control units.

The service circuit may also comprise a service battery set which comprises at least one service battery.

According to the invention, the various battery sets of the hybrid vehicle may be of various types provided they are perfectly adapted to their specific use.

According to a preferred form of implementation of the invention:
- the equipment battery set is of a medium nominal voltage, preferably being in the range of 84 V to 810 V
- the driving battery set is of a high nominal voltage or of a medium nominal voltage, preferably being in the range of 120 V to 1000 V.

According to an aspect of the invention:
- each driving battery is a battery with a low internal resistance optimized for efficient low duration high current output; and
- each equipment battery is a battery optimized for deep cyclic uses and for total energy capacity or a battery with a low or medium internal resistance optimized for efficient low or medium duration high current output.

According to an aspect of the invention, the service battery set is of a low nominal voltage, preferably being in the range of 12 V to 72 V.

According to a further aspect of the invention, each service battery is a battery optimized for deep cyclic uses and for total energy capacity or a battery of a dual type being a compromise between an energy battery and a power battery.

The control achieved by the equipment control means may be done in several ways depending for example on the bodybuilder equipment but also on several other parameters. For example, the equipment control means and the drive system control unit might be adapted to give priority to providing energy to the driving system when the vehicle is moving.

The equipment control means may also be adapted to give priority to providing power to the equipment circuit when the body builder equipment system is working.

The drive system comprises a drive system control unit which is adapted to:
- determine a level of power available from the engine unit and/or the motor system;
- and/or determine a level of energy cost;
and the equipment control means are adapted to :
- determine a level of output power for the equipment converter, according to the level of cost of energy and/or to the level of power available; and
- set the output power of the equipment converter at the determined level of output power.

The above determination can be conducted in several ways. For example, the cost of energy can comprise at least two levels corresponding to energy being free or of very low cost and to energy very expensive. The energy free level will correspond for example to braking phases or slowing down phases of the vehicle with the driving battery set highly charged. In such conditions there is plenty of electricity to be used, which cannot be stored in the driving battery set. The energy very expensive level will correspond for example to phases during which the vehicle is electrically driven, or during which the electric drive system provides torque-assist to the engine system, or during which the state of charge of the driving battery is too low. Of course, the cost of energy information provided by the drive system control unit may comprises more levels of energy cost allowing to take into consideration more accurately the functioning phases of the drive system.

Furthermore the equipment control means may be adapted to set the output level of the equipment converter according to a power required by the body builder refuse equipment as provided to the equipment control means or determined by the equipment control means. Preferably, the output level of the equipment converter will take at least two values corresponding respectively to: full power and low power. The equipment control means can also be adapted to give priority to providing power to the equipment circuit when the body builder equipment system is working. The equipment control means may also be adapted to set the output level of the equipment converter according to information of faulty component either in the drive system or in the body builder equipment.

The various above aspects, embodiments or objects of the invention may be combined in various ways with each others, provided the combined aspects, embodiments or objects are not incompatible or mutually exclusive.

Other aspects and advantages of the present invention will be apparent from the following detailed description made in conjunction with the accompanying drawing illustrating schematically some non-limitative embodiments of the invention.

### BRIEF DESCRIPTION OF THE DRAWINGS

- Figure 1 is a schematic external view of a hybrid vehicle for refuse or garbage collection according to the invention.
- Figure 2 is schematic functional view of the hybrid refuse collection vehicle shown on figure 1.

### DETAILED DESCRIPTION OF SOME EMBODIMENTS

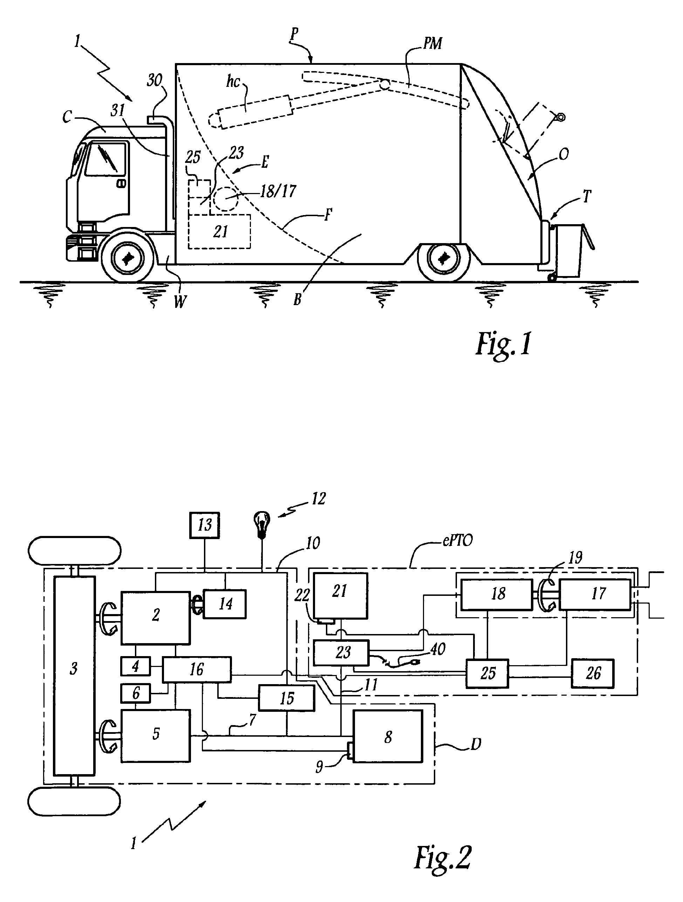

As illustrated on figure 1, a hybrid vehicle for refuse collection, according to the invention and designated as a whole by reference 1, comprises a wheeled chassis W equipped with a driving cab C and a refuse body B. As the wheeled chassis W with its cab C is usually provided by a truck manufacturer to a body builder, the refuse body B may be of any type and designed by the body builder according to the end client wishes or to the specific use of the vehicle. On shown embodiment the refuse body B has an elongated form with, towards the front of the vehicle 1, a close end E and, at the back of the vehicle, a loading opening O. In order to enable an easy unloading of the refuse when tilting the entire refuse body, the floor or bottom F of the refuse body B presents an inclined or curved shape near the closed end E, the floor F raising from the back to the front.

As shown more particularly by figure 2, the hybrid vehicle 1 comprises a drive system D which includes an internal combustion engine unit 2 powering a mechanical driveline 3. The internal combustion engine unit 2 is associated with an engine electronic control unit 4 providing at least a state of the engine unit 2 to a drive system control unit 16. The drive system D comprises also an electric drive motor system 5 which is as well operatively connected to the driveline 3. The electric drive motor system is associated with a motor electronic control unit 6 connected to the drive system control unit 16. The drive system D can be of different types such as a parallel or series type or implement a planetary gear. In the same manner the electric drive motor system 5 may comprise a single electric motor or a plurality of electric motors combined with a single electric generator or a plurality of electric generators in order to recover energy during slowing down phases of the hybrid vehicle. As the electric motor and the electric generator may be mutually separate, they also can be combined as a single motor/generator which selectively functions as an electric motor or an electric generator.

The hybrid vehicle 1 comprises a driving circuit 7 which provides electricity at least to the electric drive motor system 5 and which comprises a driving battery set 8 comprising at least one driving battery not shown. The driving battery set 8 may of course comprise a plurality of driving batteries either connected in series or in parallel depending on capacity or the nominal voltage of the driving battery set. The driving battery set is preferably of a medium or a high nominal voltage, for example being in the range of 120 V to 1000 V. Furthermore, each driving battery is preferably a battery with a low internal resistance optimized for efficient low duration high current output. In order to monitor the functioning of the driving battery set 8, the hybrid vehicle 1 comprises driving battery set sensing means 9 adapted to provide at least the state of charge of the driving battery set 8 to the drive system control unit 16.

The hybrid vehicle 1 also comprises a service circuit 10 as well as an equipment circuit 11. The service circuit 10 provides electricity at least to the engine unit 2 but also to other electrical consumers 12 schematically depicted as a light bulb on the figures. These electrical consumers or accessories are dedicated either to the safety functions of the vehicle (such as road, braking, direction and warning lights; power steering; ABS unit; engine control unit...) or to the comfort functions for the driver in the cab C (such as radio, GPS, air conditioning, cab lighting....) All these functions may be designated as a whole as traveling electrical accessories of the vehicle. The service circuit 10 comprises a service battery set 13 which comprises at least one service battery not individually shown on the figures. The service battery set 13 is of a low nominal voltage, for example being in the range of 12 V to 72 V. Each service battery is preferably a battery optimized for deep cyclic uses and for total energy capacity but can also be of a dual type being a compromise between an energy battery and a power battery. The service circuit 10 further comprises an electric generator operatively connected to the engine unit 2 and therefore driven by internal combustion engine unit 2. The service circuit 10 is also connected to the driving circuit 7 through a driving converter 15, the driving converter 15 mainly works as a step-down converter lowering voltage of the driving circuit 10 in order to provide electricity to the service circuit 7 and more particularly in order to charge the service battery set 8. The driving converter 15 can also be of a step-up/step-down type in order to reciprocally derive power from the service circuit 10 for providing electricity to the driving circuit 7.

In order to pack or compact the loaded refuse inside the body B, the vehicle further comprises a refuse compacting unit P including packing means PM actuated by at least one and preferably two hydraulic cylinders hc, only one being shown on fig. 2. According to the shown example, the vehicle 1 comprises also dustbin-tipping means T actuated by hydraulic cylinders not shown and assisting users of the vehicle for emptying dustbin db.

In order to power such refuse equipments, the vehicle further comprises an equipment electrical power take-off system ePTO adapted for providing hydraulic energy to said refuse equipment. Therefore, the bodybuilder electrical equipment ePTO comprises a hydraulic pump 17 connected to a hydraulic circuit HC partly illustrated fig.2. Such a hydraulic circuit HC is providing hydraulic energy to the various hydraulic cylinders hc through various hydraulic control accessories well known by the man skilled in the art and therefore not needing further description. The hydraulic pump 17 is driven by an equipment electric motor 18. In order to provide electricity to the equipment electric motor 18 in an autonomous manner, the equipment electrical power take-off system ePTO further comprises an equipment battery set 21. The equipment battery set 21 comprises at least one equipment battery and generally more than one equipment battery depending on the nominal voltage of the equipment battery set 21. Preferably, the equipment battery set is of a medium nominal voltage being for example in the range of 84 V to 810 V. Each equipment battery is either a battery with a low or medium internal resistance optimized for efficient low or medium duration high current output or a battery optimized for deep cyclic uses and total energy capacity depending on the type of equipment implemented by the bodybuilder. All the batteries of the equipment battery set are preferably of the same type. The hybrid vehicle 1 comprises equipment battery set sensing means 22 adapted for providing a state of charge of the equipment battery set 21. The equipment battery set 21 will be preferably situated under the slopped part of the floor F at the closed end E of the refuse body B. Such location does not reduce the space available for refuse collection so that the implementation of the electrical power take off does not affect the whole useful capacity of the refuse collection vehicle according to the invention.

The equipment electrical power take-off system ePTO further comprises an equipment converter 23 which is connected to the driving circuit 7 through the equipment circuit 11. The equipment converter 23 is adapted to step-down or step-up the voltage of the driving circuit 7 in order to provide electricity to the equipment motor 18 so as to control the power available at the hydraulic pump 17 output for the refuse equipments. The equipment converter 23 is also adapted for charging the equipment battery set 21. In order to control the equipment motor 18 and optimize the repartition of the energy during slowing phases of the hybrid vehicle as well as the repartition of the electric power provided by the electric generator 14 when the internal combustion engine 2 is running, the equipment electrical power take-off system ePTO further comprises equipment control means 25. The equipment control means are for example formed by an equipment controller implementing electronic communication and control functions. Said equipment controller 25 comprises a compute unit associated with a memory unit and communication interfaces. The equipment controller 25 may also comprise a physical interface for the body builder to connect a refuse equipment control unit 26 providing information about the energetic needs of the refuse equipments. In order to achieve this, the equipment controller 25 is connected to the converter 23 and preferably, but not necessarily, to the equipment motor 18 and to the bodybuilder equipment system 17. The equipment controller 25 is also connected to the drive system control unit 16. The connection between the equipment controller 25 and these various elements can be direct wire connection as shown, or implement a Controller Area Network (CAN) well-known by the man skilled in the art. In order to optimize the repartition of the electric power available, the equipment controller 25 may control the equipment converter 23 according to the state of the drive system D.

For example, the equipment converter 23 is controlled by the equipment control means 25 so as to give priority to providing energy to the driving battery set when the vehicle is moving, meaning shutting down the equipment converter 23 when there is no need of power for the refuse equipments, such situation corresponding to an information of low power available given by the drive system control unit 16. Such low power available information can correspond either to the vehicle moving or to a low state of charge of the driving batteries. The equipment control means 25 will set the output of the equipment converter 23 at a medium power when the level of power available given by the drive system control unit 16 is at medium value. This medium level can correspond for example to a state of charge of the driving battery set 8 being at an intermediate level. The equipment control means 25 will set the output of the equipment converter 23 at a full power when the level of power available is high and the needs of the bodybuilder equipment 17 is also high. On the other hand, the equipment control means 25 can also be adapted to give priority to provide power to the equipment circuit when the bodybuilder equipment is working which means that, even with a low level of power available, the equipment converter 23 might work its full power according to the refuse equipments' needs.

More preferably, the equipment control means 25 will also take into consideration the state of charge of the equipment battery set 21. This control can be conducted in various ways. According to a preferred embodiment, the equipment control means 25 and/or the drive system control unit 16 are adapted to:
- determine a level of power available from the drive system D;
- determine a level of energy cost;
- determine a level of output power for the equipment converter 23, according to the level of cost of energy and the level of power available; and
- set the output power of the equipment converter at the determined level of output power.

For example, when the hybrid vehicle is in a slowing down movement and the driving battery set 8 is completely or sufficiently charged, the energy available is determined as totally free. Therefore, the equipment control means 25 will set the equipment converter 23 at its full power if the equipment battery set 21 is at a low state of charge. When the state of charge of the driving battery set 8 is on an intermediate level and the vehicle is slowing down, the drive system control unit 17 will provide a medium energy cost level to the equipment control means 25. If the state of charge of the equipment battery 21 is at an intermediate level or low level, the equipment control means 25 will thus determine the power available for the equipment circuit as being intermediate and will set the output power of the equipment converter 23 at an intermediate level. Therefore, only a part of the electrical energy available will be derived to the equipment circuit 11, the other part being used for charging the driving battery set 8. In the same manner, if the state of charge of the driving battery set 8 is at a very low level, the drive system control unit 17 will provide a high energy cost level. If the state of charge of the equipment battery set 21 is not too low, the equipment control means 25 will therefore determine the level of the output power of the equipment converter 23 to be zero. The equipment converter 23 will be stopped so that all the electrical energy available will be used for charging the driving battery set 8 and the equipment 20 will run on the equipment battery set 21. Nevertheless if the energy cost level is high but the state of charge of the equipment battery set 21 is low while there is a need of power at the equipment system end, the equipment control means 25 may, in order to keep a continuity of service, set the output of the equipment converter 23 at the level adapted for the equipment system to run correctly.

Furthermore, the implementation of the battery equipment 21 and the equipment controller converter 23 in combination with the equipment control means 25 connected to the drive system control unit 16 allows a fine tuning of the charging of both the equipment battery set 21 and the driving battery set 8 in order to make sure that all the energy recovered during regenerative braking can be absorbed by either the driving battery set 8 and the equipment battery set 21 without any risk of damaging any of the battery set while the state of charge is always monitored by their respective sensing means.

In order to insure a correct cooling of the equipment battery set 21 under the slopped floor as well as of the other components of the electrical power take off situated in the same location, the vehicle may comprise a scoop 30 and an air duct 31 bringing fresh air to the equipment battery set 21.

On the shown embodiment, the converter 23 further comprises an off-board plug 40 and is adapted for deriving electrical energy from an external network.

In the shown embodiments the engine electronic control unit 4 and the motor electronic control unit 6 are two independent units, but these can be embedded in a same electronic control unit or being parts of the drive system control unit 16 controlling the drive functions and units of the vehicle. In same manner the equipment control means 25 and the refuse equipment control unit 26 are illustrated as two separate units but these can also be embedded in a same control unit.

## Claims

1. Hybrid refuse collection vehicle comprising :
- a drive system (D) comprising at least :
- an electric motor system (5) which is connected to a driving circuit (7);
- a driving battery set (8) which comprises at least a driving battery and which is connected to the driving circuit (7);
- a service circuit (10) which provides electricity at least to an engine unit (2) and which comprises a service battery set (13) comprising at least one service battery;
- an equipment circuit (11) connected to the driving circuit (7);
- an equipment electric motor (18), being mechanically decoupled from the drive system (D);
- an equipment converter (23) which is adapted to provide electrical power to the equipment electric motor,
- equipment control means (25) which are adapted to control at least the equipment converter (23),
**characterized in that** the vehicle further comprises:
- a refuse body with a closed end opposite to a loading opening;
- a refuse compacting unit comprising at least an actuator driving packing means, said equipment electric motor powering directly or indirectly at least the actuator of the refuse compacting unit
- an equipment battery set (21) which comprises at least an equipment battery;
- a refuse equipment control unit controlling at least the refuse compacting unit, **in that**
- the equipment converter (23) is also adapted to charge the equipment battery, the electrical power provided by the equipment converter being derived from the equipment circuit (11) and/or the equipment battery set;
and **in that**
- the refuse body has an inclined floor at least at the closed end; and
- the equipment battery set is situated under the inclined floor near the closed end.

2. Hybrid vehicle according to claim 1, wherein the closed end of the refuse body is oriented towards the front of the vehicle.

3. Hybrid vehicle according to any of claims 1 to 2, wherein the refuse compacting unit is hydraulically actuated and the equipment motor drives an hydraulic pump connected to an hydraulic equipment circuit.

4. Hybrid vehicle according to claim any of claims 1 to 3, further comprising dustbin-tipping means powered directly or indirectly by the equipment battery set and/or the equipment converter.

5. Hybrid vehicle according to claim 4, wherein the dustbin-tipping means are hydraulically actuated and connected to the hydraulic circuit..

6. Hybrid vehicle according to claim 1, wherein the service battery set (13) is of a low nominal voltage, preferably being in the range of 12V to 72V.

7. Hybrid vehicle according to any of preceding claims, wherein the equipment battery set (21) is of a different nominal voltage than the driving battery set (8).

8. Hybrid vehicle according to claim 7, wherein :
- the equipment battery set (21) is of a medium nominal voltage, preferably being in the range of 84 V to 810 V
- the driving battery set (8) is of a high nominal voltage or of a medium nominal voltage, preferably being in the range of 120 V to 1000 V.

9. Hybrid vehicle according to any of claims 1 to 8, wherein the equipment circuit (11) comprises an electrical converter (23) with an off-board plug (40) for deriving electrical energy from an external network.

## Patentansprüche

1. Abfallsammelhybridfahrzeug umfassend:
- ein Antriebssystem (D), das wenigstens umfasst:
- ein Elektromotorsystem (5), das mit einer Antriebsschaltung (7) verbunden ist;
- einen Antriebsbatteriesatz (8), der wenigstens eine Antriebsbatterie umfasst und der mit der Antriebsschaltung (7) verbunden ist;
- eine Betriebsschaltung (10), die wenigstens für eine Motoreinheit (2) Elektrizität bereitstellt und die einen Betriebsbatteriesatz (13) umfasst, der wenigstens eine Betriebsbatterie umfasst;
- eine Ausrüstungsschaltung (11), die mit der Antriebsschaltung (7) verbunden ist;
- einen Ausrüstungselektromotor (18), der von dem Antriebssystem (D) mechanisch entkoppelt ist;
- einen Ausrüstungswandler (23), der dazu ausgelegt ist, für den Ausrüstungselektromotor elektrische Leistung bereitzustellen;
- Ausrüstungssteuereinrichtungen (25), die dazu ausgelegt sind, wenigstens den Ausrüstungswandler (23) zu steuern;
**dadurch gekennzeichnet, dass** das Fahrzeug weiterhin umfasst:
- einen Abfallaufbau mit einem geschlossenen Ende, das sich entgegengesetzt zu einer Ladeöffnung befindet;
- eine Abfallverdichtungseinheit mit wenigstens einem Stellglied, das eine Packeinrichtung antreibt, wobei der Ausrüstungselektromotor wenigstens das Stellglied der Abfallverdichtungseinheit direkt oder indirekt mit Energie versorgt;
- einen Ausrüstungsbatteriesatz (21), der wenigstens eine Ausrüstungsbatterie umfasst;
- eine Abfallausrüstungssteuereinheit, die wenigstens die Abfallverdichtungseinheit steuert; und dass
- der Ausrüstungswandler (23) auch dazu ausgelegt ist, die Ausrüstungsbatterie aufzuladen, wobei die von dem Ausrüstungswandler bereitgestellte elektrische Energie von der Ausrüstungsschaltung (11) und/oder dem Ausrüstungsbatteriesatz abgeleitet wird;
und dass
- der Abfallaufbau wenigstens an dem geschlossenen Ende einen geneigten Boden aufweist; und
- der Ausrüstungsbatteriesatz sich unter dem geneigten Boden in der Nähe des geschlossenen Endes befindet.

2. Hybridfahrzeug nach Anspruch 1, wobei das geschlossene Ende des Abfallaufbaus in Richtung der Vorderseite des Fahrzeugs ausgerichtet ist.

3. Hybridfahrzeug nach irgendeinem der Ansprüche 1 bis 2, wobei die Abfallverdichtungseinheit hydraulisch betätigt wird und der Ausrüstungsmotor eine Hydraulikpumpe antreibt, die mit einem Ausrüstungshydraulikkreislauf verbunden ist.

4. Hybridfahrzeug nach irgendeinem der Ansprüche 1 bis 3, das weiterhin Mülltonnenkippeinrichtungen umfasst, die durch den Ausrüstungsbatteriesatz und/oder den Ausrüstungswandler direkt oder indirekt mit Energie versorgt werden.

5. Hybridfahrzeug nach Anspruch 4, wobei die Mülltonnenkippeinrichtungen hydraulisch betätigt werden und mit dem Hydraulikkreislauf verbunden sind.

6. Hybridfahrzeug nach Anspruch 1, wobei der Betriebsbatteriesatz (13) eine niedrige Nennspannung aufweist, die vorzugsweise im Bereich von 12V bis 72V liegt.

7. Hybridfahrzeug nach irgendeinem der vorhergehenden Ansprüche, wobei der Ausrüstungsbatteriesatz (21) eine andere Nennspannung als der Antriebsbatteriesatz (8) aufweist.

8. Hybridfahrzeug nach Anspruch 7, wobei:
- der Ausrüstungsbatteriesatz (21) eine mittlere Nennspannung aufweist, die vorzugsweise im Bereich von 84 V bis 810 V liegt;
- der Antriebsbatteriesatz (8) eine hohe Nennspannung oder eine mittlere Nennspannung aufweist, die vorzugsweise im Bereich von 120 V bis 1000 V liegt.

9. Hybridfahrzeug nach irgendeinem der Ansprüche 1 bis 8, wobei die Ausrüstungsschaltung (11) einen elektrischen Wandler (23) mit einem fahrzeugfremden Stecker (40) zum Ableiten elektrischer Energie aus einem externen Netzt umfasst.

## Revendications

1. Camion à ordures hybride comprenant :
- un système d'entraînement (D) comprenant au moins :
- un système de moteur électrique (5) relié à un circuit d'entraînement (7) ;
- un ensemble batterie d'entraînement (8) comprenant au moins une batterie d'entraînement et relié au circuit d'entraînement (7) ;
- un circuit de service (10) fournissant de l'électricité à au moins une unité motrice (2) et comprenant un ensemble batterie de service (13) comprenant au moins une batterie de service ;
- un circuit d'équipement (11) relié au circuit d'entraînement (7) ;
- un moteur électrique d'équipement (18) mécaniquement découplé du système d'entraînement (D) ;
- un convertisseur d'équipement (23) conçu pour fournir du courant électrique au moteur électrique d'équipement ;
- des moyens de commande d'équipement (25) conçus pour commander au moins le convertisseur d'équipement (23) ; **caractérisé en ce que** le véhicule comprend en outre :
- un corps de collecte d'ordures avec une extrémité fermée opposée à une ouverture de chargement ;
- une unité de compactage d'ordures comprenant au moins des moyens de recouvrement d'entraînement d'actionneur, ledit équipement moteur alimentant directement ou indirectement en courant électrique au moins l'actionneur de l'unité de compactage d'ordures ;
- un ensemble batterie d'équipement (21) comprenant au moins une batterie d'équipement ;
- une unité de commande d'équipement de gestion des ordures commandant au moins l'unité de compactage d'ordures ; que
- le convertisseur d'équipement (23) est également conçu pour charger la batterie d'équipement, le courant électrique fourni par le convertisseur d'équipement étant dérivé du circuit d'équipement (11) et/ou de l'ensemble batterie d'équipement ; et
- le corps de collecte d'ordures a un plancher incliné au moins au niveau de l'extrémité fermée ; et
- l'ensemble batterie d'équipement est situé sous le plancher incliné à proximité de l'extrémité fermée.

2. Véhicule hybride selon la revendication 1, dans lequel l'extrémité fermée du corps de collecte d'ordures est orientée vers l'avant du véhicule.

3. Véhicule hybride selon l'une quelconque des revendications 1 à 2, dans lequel l'unité de compactage d'ordures est actionnée hydrauliquement et l'équipement moteur entraine une pompe hydraulique reliée à un circuit d'équipement hydraulique.

4. Véhicule hybride selon l'une quelconque des revendications 1 à 3, comprenant en outre des moyens de basculement de poubelle alimentés directement ou indirectement par l'ensemble batterie d'équipement et/ou par le convertisseur d'équipement.

5. Véhicule hybride selon la revendication 4, dans lequel les moyens de basculement de poubelle sont actionnés hydrauliquement et reliés au circuit hydraulique.

6. Véhicule hybride selon la revendication 1, dans lequel l'ensemble batterie de service (13) présente une faible tension nominale, de préférence comprise dans la plage allant de 12 V à 72 V.

7. Véhicule hybride selon l'une quelconque des revendications précédentes, dans lequel l'ensemble batterie d'équipement (21) présente une tension nominale différente de celle de l'ensemble batterie d'entraînement (8).

8. Véhicule hybride selon la revendication 7, dans lequel :
- l'ensemble batterie d'équipement (21) présente une tension nominale moyenne, de préférence comprise dans la plage allant de 84 V à 810 V ;
- l'ensemble batterie d'entraînement (8) présente une tension nominale élevée ou une tension nominale moyenne, de préférence comprise dans la plage allant de 120 V à 1000 V.

9. Véhicule hybride selon l'une quelconque des revendications 1 à 8, dans lequel le circuit d'équipement (11) comprend un convertisseur électrique (23) avec une prise externe (40) permettant de dériver l'énergie électrique provenant d'un réseau externe.
